# EUROPÄISCHE PATENTSCHRIFT

(11) **EP 0 861 164 B1**
(45) Veröffentlichungstag und Bekanntmachung des Hinweises auf die Patenterteilung: **30.06.1999**
(21) Anmeldenummer: 96945856.1
(22) Anmeldetag: 04.11.1996
(51) Int. Cl.: B60M 1/00

(54) **VERFAHREN ZUR REGELUNG DER INNENRAUMTEMPERATUR VON KRAFTFAHRZEUGEN UND KLIMATISIERUNGSVORRICHTUNG ZUR DURCHFÜHRUNG DIESES VERFAHRENS**
METHOD OF ADJUSTING THE INTERIOR TEMPERATURE OF MOTOR VEHICLES AND AN AIR CONDITIONING SYSTEM FOR APPLYING THE METHOD
PROCEDE DE REGLAGE DE LA TEMPERATURE A L'INTERIEUR DE L'HABITACLE DE VEHICULES ET DISPOSITIF DE CLIMATISATION CORRESPONDANT

(30) Priorität: 14.11.1995 DE 19542325
(43) Veröffentlichungstag der Anmeldung: 02.09.1998
(73) Patentinhaber: ADAM OPEL AG, 65423 Rüsselsheim (DE)
(72) Erfinder: JORDAN, Frank, D-65428 Rüsselsheim (DE)
(74) Vertreter: Bergerin, Ralf, Dipl.-Ing.
(86) Internationale Anmeldenummer: DE9602091
(87) Internationale Veröffentlichungsnummer: WO9718102

(56) Entgegenhaltungen:
- EP-A- 0 492 324
- DE-A- 3 903 462
- DE-A- 4 040 846
- DE-U- 8 916 090
- FR-A- 2 690 652
- PATENT ABSTRACTS OF JAPAN vol. 016, no. 484 (M-1322), 7.Oktober 1992 & JP 04 176724 A (FUJI HEAVY IND LTD), 24.Juni 1992,

## Beschreibung

Die Erfindung bezieht sich auf ein Verfahren zur Regelung der Innenraumtemperatur von Kraftfahrzeugen und auf eine Klimatisierungsvorrichtung zur Durchführung dieses Verfahrens.

Entsprechende Verfahren nach dem Oberbegriff des Patentanspruchs 1 sind beispielsweise aus der DE-PS 40 40 846, DE-OS 39 03 462 oder dem DE-GM 89 16 090 bekannt.

Nach der DE-PS 40 40 846 soll eine bestmögliche Ausregelung des Einflusses der Sonneneinstrahlung auf die Innenraum-Temperaturregelung bei allen Betriebszuständen des Kraftfahrzeugs erfolgen. Verschiedene Zeitkonstanten des Fahrgastraumes und des Innentemperaturfühlers werden eingeführt. Dies wird vorgeschlagen, da der Innentemperaturfühler in der Regel von der Sonneneinstrahlung nicht direkt mit erwärmt wird.

In der DE-OS 39 03 462 wird eine Klimatisierungsvorrichtung, die sehr schnell auf variable Sonneneinstrahlung reagiert, vorgeschlagen. Dadurch soll manueller Aufwand vermieden werden.

Das DE-GM 89 16 090 befaßt sich mit dem speziellen Thema der Luftverteilung im Fahrzeuginnenraum, wobei diese in Abhängigkeit von der Außen- und Innentemperatur sowie der sensorisch erfaßten Sonneneinstrahlung eingestellt wird.

Alle bekannten Verfahren zur Kraftfahrzeug-Innenraumklimatisierung, bei denen Meßwerte für die Sonneneinstrahlung in die Regelung einbezogen werden, sind nicht zufriedenstellend in der Anfangsphase des Kraftfahrzeugbetriebs, also nach einer gewissen Außerbetriebszeit. Wird ein Fahrzeug nach einer Fahrt geparkt, sind im Innenraum bestimmte Klimaverhältnisse, insbesondere eine bestimmte Temperatur vorhanden. Es gibt jedoch Wärmequellen, die sich nach Abstellen des Fahrzeugs nur langsam abkühlen und dabei Wärme an die Umgebung abgeben. Dies kann Wärme von elektrischen oder elektronischen Komponenten (Radio, Steuergeräte, ...) oder auch Wärme eines Heizkerns der Klimatisierungsvorrichtung sein. Je nach Anbringungsort kann ein Innentemperatur-Meßfühler dieser Wärme ausgesetzt sein. Da ein solcher Sensor bei außerbetriebgesetztem Fahrzeug nicht belüftet wird, heizt er sich auf. Für die Unterbringung des Meßfühlers bestehen nur begrenzt Möglichkeiten, die sich funktionellen, designerischen und ökonomischen Vorgaben ergeben. Oft wird ein Ort unterhalb der Armaturentafel ausgewählt, wo die genannten Wärmequellen Einfluß haben.

Im Ergebnis wird bei einem Neustart des Kraftfahrzeugs ein deutlich zu hoher Innentemperaturwert ausgelesen. Die wahre Innentemperatur ist viel geringer, aber aufgrund des falschen Meßwertes werden Stellglieder der Klimatisierungsvorrichtung auf starken Kühlbetrieb eingeregelt und es wird in der Anfangsphase des Fahrzeugbetriebs kälter als die Insassen dies wünschen. Dieser Effekt kann noch verstärkt werden, wenn bei der erneuten Inbetriebnahme des Fahrzeugs die Sonneneinstrahlung stark ist, was zu verstärkten Abkühlung führt.

Es ist Aufgabe der Erfindung, ein Verfahren und eine Klimatisierungsvorrichtung zu schaffen, die es ermöglichen, direkt nach einer Inbetriebnahme eines Kraftfahrzeugs die Innenraumtemperatur schnell an einen vorgewählten Sollwert anzunähern. Dies soll mit möglichst geringem Aufwand und unter Vermeidung von zusätzlichen manuellen Bedienungshandlungen erfolgen.

Zur Lösung dieser Aufgabe zeichnet sich das Verfahren nach dem Oberbegriff des Patentanspruchs 1 durch die in diesem Patentanspruch angegebenen kennzeichnenden Merkmale aus. Weitere diesbezügliche Einzelheiten ergeben sich aus den Patentansprüchen 2 bis 6. Die Klimatisierungsvorrichtung zur Durchführung des Verfahrens ist im Patentanspruch 7 gekennzeichnet.

Erfindungsgemäß werden Meßsignale des Sonnensensors auch nach einer Außerbetriebsetzung des Kraftfahrzeugs über eine festgelegte Zeitspanne ausgelesen. Diese Meßsignale werden permanent oder periodisch in einem elektronischen Speicher abgelegt und stehen einer Regeleinrichtung auch nach erneuter Inbetriebnahme des Kraftfahrzeugs zur Verfügung. In der Regeleinrichtung können Parameter zur Einstellung von Stellgliedern einer Klimatisierungsvorrichtung unter Berücksichtigung der Bedingungen während der Außerbetriebszeit berechnet werden. Damit ergibt sich in überraschender Weise der Vorteil, daß Temperatursollwerte nach einer erneuten Inbetriebnahme des Kraftfahrzeugs sehr schnell erreicht werden. Mit den Daten, die einen Anhaltspunkt für die Sonnenverhältnisse während der Außerbetriebszeit bilden, kann ein nach der Inbetriebnahme erfaßtes Innentemperatur-Meßsignal bewertet werden. Insbesondere erfolgt dies, nachdem auch der zuletzt vor der Außerbetriebnahme des Kraftfahrzeugs erfaßte Meßwert des Innentemperaturfühlers abgespeichert und nach der erneuten Inbetriebnahme zu Vergleichszwecken zur Verfügung steht: War das Kraftfahrzeug für eine Zeit die kleiner ist, als eine vorab festgelegte Zeit abgestellt, wird der nach der Inbetriebnahme erfaßte Innentemperatur-Meßwert (aktuelle Wert) mit dem vor der Außerbetriebsetzung abgespeicherten Innentemperatur-Meßwert (alten Wert) verglichen. Ist der aktuelle Wert wesentlich höher als der alte Wert, so kann der Temperaturanstieg nur durch Sonneneinstrahlung verursacht worden sein, wenn dieser aktuelle Wert tatsächlich die Innenraumtemperatur repräsentiert. Wird also nach Auswertung der gespeicherten Signale des Sonnensensors festgestellt, daß ein gewisses Maß an Sonneneinstrahlung vorlag, kann dem aktuellen Wert "geglaubt" werden und er wird von der Regeleinrichtung zur automatischen Einstellung der Stellglieder herangezogen. Lag jedoch keine Sonnenbestrahlung des Kraftfahrzeugs vor, kann der aktuelle Wert nur falsch sein. Der Innentemperatursensor ist in diesem Fall von sonstigen Wärmequellen beeinflußt worden, was jedoch nicht zu einer nennenswerten Fahrzeugaufheizung führt. In diesem Fall (keine Sonneneinstrahlung) wird der alte Wert von der Regeleinrichtung genutzt. Diese beiden Extremfälle (starke Sonneneinstrahlung - aktueller Wert gilt; keine Sonneneinstrahlung - alter Wert gilt) werden ergänzt durch Innenraumtemperaturen für die Regeleinrichtung, die durch Korrelation ermittelt werden (mittlere Sonneneinstrahlung - gemittelter Wert zwischen aktuellem und altem Wert).

Steht das Fahrzeug für eine kurze Zeit, die innerhalb der festgelegten Zeitspanne liegt, und stimmen der alte und der aktuelle Wert der Innentemperatur überein, wird unabhängig von den abgespeicherten Sonnensensor-Meßwerten davon ausgegangen, daß diese Temperatur den tatsächlichen Gegebenheiten entspricht.

Steht das Fahrzeug länger als die festgelegte Zeitspanne, wird dem aktuell erfaßten Innentemperatur-Meßwert nach der Inbetriebnahme "geglaubt" und dieser Wert bildet eine Grundlage für die Regelung. Beträgt diese Zeitspanne beispielsweise 2 Stunden, kann davon ausgegangen werden, daß sonstige Wärmequellen im Fahrzeug abgekühlt sind und der Innentemperaturfühler auch die Temperatur des Innenraums angenommen hat.

Wesentliche Verbesserungen der Regelungsqualität werden somit vorrangig nach sogenanntem Kurzparken erreicht (Parkzeiten geringer als die festgelegte Zeitspanne).

Eine zur Durchführung des beschriebenen Verfahrens geeignete Klimatisierungsvorrichtung weist neben den an sich bekannten Merkmalen solcher Vorrichtungen (Regeleinrichtung, Meßfühler, Stellglieder) einen elektronischen Speicher auf. Dieser Speicher ist innerhalb einer Stand-by-Schaltung während der Außerbetriebszeit des Kraftfahrzeugs mit Meßwerten des Sonnensensors beschreibbar, wobei diese permanent oder periodisch abgefragt werden. Der Speichervorgang wird über einen Zeitgeber gesteuert, so daß über maximal die festgelegte Zeitspanne Daten über die Sonneneinstrahlung sicher abgespeichert werden. Nach erneuter Inbetriebnahme des Kraftfahrzeugs (Erkennung des Kraftfahrzeugzustandes über Zündschloß) können die Speicherwerte abgefragt und ausgewertet werden.

Eine detaillierte Beschreibung des Verfahrens und der zugehörigen Klimatisierungsvorrichtung erfolgt anhand eines Ausführungsbeispiels, wobei eine zugehörige Figur eine Klimatisierungsvorrichtung in Verbindung mit einer Regeleinrichtung schematisch zeigt.

Die gezeigte Klimatisierungsvorrichtung weist ein Gebläse 1, einen Verdampfer 2 und einen Heizkern 3 auf. Über verschiedene Luftauslässe (nicht beziffert) wird temperierte Luft in einen Fahrzeuginnenraum geleitet. Die Einstellung der Klimatisierungsvorrichtung erfolgt durch Stellglieder, wobei ein Stellglied die Gebläsedrehzahl steuert, ein Stellglied den Betrieb des Verdampfers 2 bestimmt, ein weiteres Stellglied 4 die Heizleistung festlegt und weitere Stellglieder 5 bis 7 die Luftverteilung zu den verschiedenen Luftauslässen bestimmen. Die Stellglieder sind manuell oder automatisch beeinflußbar.

Für die automatische Einstellung der Klimatisierungsvorrichtung ist eine Regeleinrichtung 8 vorgesehen. Von einem Solltemperaturgeber 9 wird von Fahrzeuginsassen eine gewünschte Innentemperatur vorgegeben. Der Sollwert ist eine Eingangsgröße für die Regeleinrichtung 8. Diese hat die Aufgabe, Regelparameter zu berechnen und einzustellen, um möglichst schnell den gewünschten Wert der Innentemperatur zu erreichen. Zur Erreichung dieses Ziels sind weitere Eingangsparameter nutzbar: Ein Außentemperatur-Meßfühler 10, ein Innentemperatur-Meßfühler 11 sowie ein Sonnensensor 12 erfassen beim Betrieb des Kraftfahrzeugs Meßgrößen und geben diese an die Regeleinrichtung 8 als Eingangsgrößen weiter, wie dies bekannt ist. Der Sonnensensor 12 ist im oberen Armaturentafelbereich unter einer Windschutzscheibe 13 angeordnet. Der Innentemperatur-Meßfühler 11 ist durch ein separates Gebläse belüftet (was jedoch nicht zwingend notwendig ist) und unsichtbar im unteren Armaturentafelbereich plaziert. Er soll eine für den Innenraum des Kraftfahrzeugs repräsentative Temperatur erfassen. Es können weitere Sensoren zusätzliche Eingangsgrößen für die Regeleinrichtung 8 liefern.

Die Regeleinrichtung 8 ist mit dem Zündschloß 14 des Fahrzeugs verbunden, so daß ein Signal vorliegt, das Änderungen des Betriebszustandes kennzeichnet (Ein; Aus). Des weiteren wird die Regeleinrichtung 8 unabhängig von der Fahrzeugzündung mit Spannung versorgt (Batterie 15).

Wird das Kraftfahrzeug nach einer Fahrt abgestellt, wird auch die Klimatisierungsvorrichtung außer Betrieb gesetzt. Während der Außerbetriebszeit kann es zu einer ungewollten Aufheizung des Innentemperatur-Meßfühlers 11 kommen, da er im Wärmestrahlungsbereich eines Radios 16, elektronischer Komponenten 17 und auch des Heizkerns 3 liegt. Bekannte Regeleinrichtungen lesen nach dem Fahrzeugstart diesen hohen Sensorwert aus und die Klimatisierungsvorrichtung wird anfänglich auf starke Kühlleistung eingestellt, obwohl dies gar nicht erforderlich ist.

Erfindungsgemäß werden auch nach Außerbetriebsetzung des Kraftfahrzeugs Meßwerte des Sonnensensors 12 eine festgelegte Zeit lang erfaßt und abgespeichert. Diese Meßwerte stehen nach Inbetriebnahme des Fahrzeugs zur Verfügung und bilden eine Grundlage für eine Bewertung des dann vorliegenden Innentemperatur-Meßwertes.

Die Regeleinrichtung 8 besteht aus einer nicht näher gezeigten Ein-/Ausgabeeinheit mit einem internen Bus. Über den Bus sind eine Steuereinheit 18, ein Mikroprozessor 19 und ein elektronischer Speicher 20 miteinander verbunden. Die Eingangsdaten Außentemperatur, Innentemperatur und Solltemperatur gelangen direkt oder über die Steuereinheit 18 in einen Arbeitsspeicher des Mikroprozessors 19. Das die Position des Zündschlosses 14 kennzeichnende Signal gelangt, wie das Signal des Sonnensensors 12, zur Steuereinheit 18. Ist die Zündung eingeschaltet, werden die Sonnensensor-Meßwerte ebenfalls zum Mikroprozessor 19 weitergeleitet und in an sich bekannter Weise verarbeitet. Wird die Zündung jedoch abgestellt (Außerbetriebsetzung des Kraftfahrzeugs), werden die Sonnensensor-Meßwerte beispielsweise 2 Stunden lang permanent oder periodisch in dem Speicher 20 abgelegt. Dazu sind einerseits die separate Spannungsversorgung von der Batterie 15 und andererseits ein entsprechender Zeitgeber als Bestandteil der Steuereinheit 18 notwendig, die eine sogenannte Standby-Schaltung bilden. Falls das Fahrzeug innerhalb der festgelegten Zeitspanne (2 Stunden) wieder gestartet wird, werden die gespeicherten Daten vom Mikroprozessor 19 ausgewertet. Im Arbeitsspeicher des Mikroprozessors 19 ist neben der zuletzt vor der Außerbetriebsetzung erfaßten Innentemperatur auch ein aktuell erfaßter Innentemperatur-Meßwert vorhanden. Zeigt ein Vergleich, daß der aktuelle Wert wesentlich höher ist als der alte Wert, werden die abgespeicherten Sonnensensor-Meßwerte zur Bewertung des aktuellen Wertes herangezogen:
1. Wurde während der Außerbetriebszeit sehr starke Sonneneinstrahlung S erfaßt (größer als ein vorab bestimmter Maximalwert), wird dem aktuell erfaßten Innentemperatur-Meßwert "geglaubt" und dieser findet als Regelparameter Verwendung.
2. Wurde während der Außerbetriebszeit des Kraftfahrzeugs nahezu keine Sonneneinstrahlung S erfaßt (kleiner als ein Minimalwert), findet der alte Innentemperatur-Meßwert als Regelparameter Verwendung. Da in diesem Fall keine Erwärmung durch Sonne erfolgt sein kann, ist dem aktuellen Wert nicht zu "glauben". Aktuelle Meßwerte werden erst nach einer kurzen Betriebszeit (2 bis 5 Minuten) in die Regelung einbezogen, wenn der Meßfühler 11 ausreichend belüftet wurde, also "glaubhafte" Werte liefert.
3. Wurde in der Außerbetriebszeit eine Sonneneinstrahlung zwischen dem Maximalwert und dem Minimalwert erfaßt, wird eine zwischen der alten und der aktuellen Innentemperatur korrelierte Innentemperatur als Regelparameter verwendet.

Der Maximal- und Minimalwert sind vorgegebene rechnerische Werte, die sich auf bestimmte Energiemengen beziehen. Die gespeicherten Sonnensensor-Meßwerte werden derart ausgewertet, daß sich eine Energiemenge ergibt, die in den Fahrzeuginnenraum eingebracht wurde. Diese Werte lassen sich experimentell ermitteln, wobei auch noch die Richtung der Sonneneinstrahlung von Bedeutung sein kann. Sonnensensoren, die auch darüber Auskunft geben, sind verfügbar.

Hat das Fahrzeug länger als die festgelegte Zeitspanne gestanden oder sind alter und aktueller Innentemperatur-Meßwert nahezu identisch, wird
4. die aktuell erfaßte Innentemperatur als Regelparameter benutzt, da diese dann "glaubhaft" ist.

Somit wird das Ziel erreicht, daß die Klimatisierungsvorrichtung auch nach kurzen Parkvorgängen sehr schnell die gewünschte Innentemperatur einstellt. Dies erfolgt mit sehr geringem Aufwand vollautomatisch, also ohne zusätzlichen manuellen Aufwand.

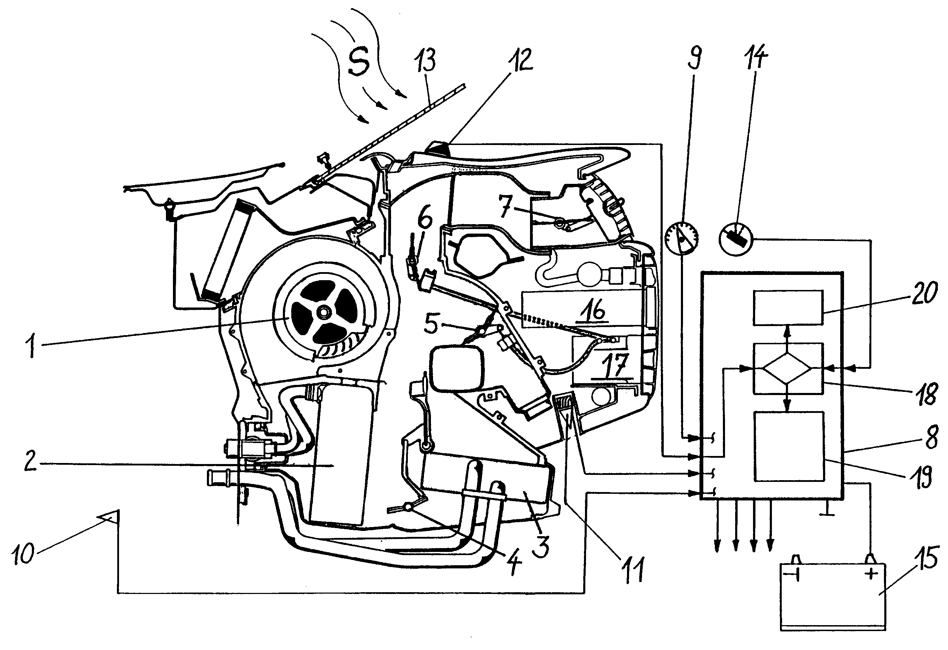

## Patentansprüche

1. Verfahren zur Regelung der Innenraumtemperatur von Kraftfahrzeugen, mit einer Regeleinrichtung (8), der Signale von mindestens einem Innentemperaturfühler (11), ggf. einem Außentemperaturfühler (10), von mindestens einem Solltemperaturgeber (9) und von mindestens einem die Sonneneinstrahlung erfassenden Sonnensensor (12) zugeführt werden und mit von der Regeleinrichtung (8) ansteuerbaren Stellgliedern (4 bis 7), die die dem Innenraum zugeführte Wärmemenge, Luftmenge und Luftverteilung beeinflussen, wobei die Einstellung der Stellglieder (4 bis 7) automatisch in Abhängigkeit von der Größe der Meßsignale erfolgt, **dadurch gekennzeichnet**, daß Meßsignale des Sonnensensors (12) auch bei nicht in Betrieb befindlichen Kraftfahrzeug über eine festgelegte Zeitspanne nach der Außerbetriebsetzung des Kraftfahrzeugs erfaßt werden und der Regeleinrichtung (8) nach erneuter Inbetriebnahme des Kraftfahrzeugs als Regelparameter zur Verfügung stehen.

2. Verfahren nach Anspruch 1, **dadurch gekennzeichnet**, daß die Zeitspanne nach der Außerbetriebsetzung des Kraftfahrzeugs etwa zwei Stunden beträgt und innerhalb dieser Zeitspanne Meßsignale des Sonnensensors (12) elektronisch gespeichert werden.

3. Verfahren nach Anspruch 2, **dadurch gekennzeichnet**, daß Meßsignale des Sonnensensors (12) periodisch erfaßt und abgespeichert werden.

4. Verfahren nach Anspruch 1, **dadurch gekennzeichnet**, daß die jeweils letzte beim Betrieb des Kraftfahrzeugs erfaßte Innenraumtemperatur abgespeichert wird und der Regeleinrichtung (8) auch nach einer erneuten Inbetriebnahme des Kraftfahrzeugs als Regelparameter zur Verfügung steht.

5. Verfahren nach zumindest einem der Ansprüche 1 bis 4, **dadurch gekennzeichnet**, daß die bei nicht in Betrieb befindlichem Fahrzeug erfaßten Meßwerte des Sonnensensors (12) zur Bewertung der direkt nach einer Inbetriebnahme des Fahrzeugs erfaßten Innenraumtemperatur herangezogen wird.

6. Verfahren nach den Ansprüchen 1 bis 5, **dadurch gekennzeichnet**, daß bei einer Inbetriebnahme des Kraftfahrzeugs außerhalb der festgelegten Zeitspanne (lange Abstellzeit)
- die aktuell erfaßte Innenraumtemperatur zur Regelung der Stellglieder (4 bis 7) herangezogen wird,
und bei einer Inbetriebnahme des Kraftfahrzeugs innerhalb der festgesetzten Zeitspanne (kurze Abstellzeit) sowie einem aktuellen Innentemperatur-Meßwert, der höher ist als der zuletzt vor der Außerbetriebsetzung erfaßte Innentemperatur-Meßwert
- die zuletzt vor der Außerbetriebsetzung abgespeicherte Innenraumtemperatur zur Regelung der Stellglieder (4 bis 7) herangezogen wird, wenn die Sonneneinstrahlung in der Außerbetriebszeit unter einem Minimalwert lag,
- die aktuell erfaßte Innenraumtemperatur zur Regelung der Stellglieder (4 bis 7) herangezogen wird, wenn die Sonneneinstrahlung in der Außerbetriebszeit über einem Maximalwert lag und
- ein durch Korrelation errechneter, zwischen der aktuell erfaßten und der zuletzt vor der Außerbetriebsetzung abgespeicherten Innenraumtemperatur liegender Innenraum-Temperaturwert zur Regelung der Stellglieder (4 bis 7) herangezogen wird, wenn die Sonneneinstrahlung in der Außerbetriebszeit zwischen dem Minimal- und dem Maximalwert lag.

7. Klimatisierungsvorrichtung zur Durchführung des Verfahrens nach den Patentansprüchen 1 bis 6 mit:
- einer Regeleinrichtung (8),
- zumindest einem Innentemperatur-Meßfühler (11), ggf. einem Außentemperaturfühler (10), zumindest einem Solltemperaturgeber (9) und zumindest einem Sonnensensor (12),
- Stellgliedern (4 bis 7), die von der Regeleinrichtung (8) ansteuerbar und über die die dem Fahrzeuginnenraum zuzuführende Wärmemenge, Luftmenge und Luftverteilung einstellbar sind, und mit
- einer ständig oder periodisch während der Außerbetriebszeit des Kraftfahrzeugs arbeitenden Stand-by-Schaltung, die vom Sonnensensor (12) erfaßte Meßwerte in einem elektronischen Speicher (20) ablegt.

## Claims

1. A method to control the inside temperature of motor vehicles, with a control device (8), to which signals of at least one inside temperature sensor (11), possibly of an outside temperature sensor (10), of at least one indicator (9) of the desired temperature and of at least one solar sensor (12) registering the solar radiation, are introduced and with adjusting elements (4 to 7) controllable by the control unit (8) which adjusting elements influence the amount of heat, amount of air and distribution of air introduced into the interior, wherein the adjustment of the adjusting elements (4 to 7) is carried out automatically as a function of the magnitude of the measured signals, characterized in that the measured signals of the solar sensor (12) are registered even in the case of a non-operational motor vehicle over a specified time period after stopping the operation of the motor vehicle and they are available as a control parameter to the control device (8) after the re-starting of the motor vehicle.

2. A method according to claim 1, characterized in that the time period after stopping the operation of the motor vehicle is approx. two hours and the measured signals of the solar sensor (12) are electronically stored within this time period.

3. A method according to claim 2, characterised in that the measured signals of the solar sensor (12) are periodically registered and stored.

4. A method according to claim 1, characterized in that on each occasion the last inside temperature registered during the operation of the motor vehicle is stored and is available to the control device (8) as a control parameter even after the re-starting of the motor vehicle.

5. A method according to at least one of the claims 1 to 4, characterised in that the measured values of the solar sensor (12) registered in the case of a non-operational motor vehicle are referred to to evaluate the inside temperature registered immediately after starting up the vehicle.

6. A method according to at least one of the claims 1 to 5, characterised in that when the motor vehicle is started up outside of the specified time period (long shut-down period)
• the actually registered inside temperature is referred to to control the adjusting elements (4 to 7),
and when the motor vehicle is started up within the specified time period (short shut-down period) and the actual measured value of the inside temperature, which is higher than the measured inside temperature registered last before stopping the operation
• the inside temperature stored last before stopping the operation is referred to to control the adjusting elements (4 to 7) when the solar radiation during the non-operational period was below a minimum value, the actually registered inside temperature is referred to to control the adjusting elements (4 to 7), when the solar radiation during the non-operational period was over a maximum value and
• an inside temperature value, calculated by correlation, is referred to to control the adjusting elements (4 to 7), which inside temperature is between the actually registered and the one last stored before stopping the operation, if the solar radiation during the non-operational period was between the minimum and maximum values.

7. An air-conditioning system to carry out the method according to the patent claims 1 to 6, having:
• a control device (8),
• at least one inside temperature sensor (11), possibly an outside temperature sensor (10), at least one indicator (9) of the desired temperature and at least one solar sensor (12),
• adjusting elements (4 to 7) which can be controlled by the control device (8) and can be set with regard to the amount of heat, amount of air and air distribution into the interior of the vehicle, and
• a stand-by circuit operating constantly or periodically during the non-operational period of the motor vehicle, which circuit files the measured values registered by the solar sensor (12) in an electronic storage (20).

## Revendications

1. Procédé de régulation de là température intérieure de véhicules automobiles, comportant un dispositif de régulation (8) auquel sont transmis des signaux d'au moins un capteur de température intérieure (11), le cas échéant d'un capteur de température extérieure (10), d'au moins un transmetteur de température de consigne (9) et d'au moins un senseur de soleil (12) qui mesure l'ensoleillement, ainsi que des organes de réglage (4 à 7) commandés par le dispositif de régulation (8) qui agissent sur la quantité de chaleur, la quantité d'air et la répartition de l'air introduit dans l'habitacle, l'actionnement des organes de réglage (4 à 7) ayant lieu de manière automatique en fonction de la valeur des signaux de mesure, caractérisé par le fait que des signaux de mesure de senseur de soleil (12) sont mesurés également lorsque le moteur du véhicule est coupé, pendant un laps de temps déterminé après la coupure du moteur du véhicule, et que ces signaux de mesure sont transmis au dispositif de régulation (8) en tant que paramètres de réglage après le redémarrage du véhicule automobile.

2. Procédé selon la revendication 1, caractérisé par le fait que le laps de temps après la coupure du moteur du véhicule est d'environ deux heures et que pendant ce laps de temps des signaux de mesure du senseur de soleil (12) sont mémorisés par voie électronique.

3. Procédé selon la revendication 2, caractérisé par le fait que que les signaux de mesure du senseur de soleil (12) sont mesurés et on mémorisés de manière périodique.

4. Procédé selon la revendication 1, caractérisé par le fait que que la dernière température intérieure mesurée lorsque le moteur du véhicule était en fonctionnement est mémorisée chaque fois et est également transmise au dispositif de régulation (8) après le redémarrage du moteur du véhicule.

5. Procédé selon au moins une des revendications 1 à 4, caractérisé par le fait que les valeurs de mesure du senseur de soleil (12) déterminées lorsque le moteur du véhicule était coupé sont utilisées pour exploiter la température intérieure d'habitacle mesurée immédiatement après le redémarrage du véhicule.

6. Procédé selon les revendications 1 à 5, caractérisé par le fait que dans le cas d'un redémarrage du véhicule en dehors du laps de temps fixé (stationnement de longue durée)
- on utilise la température intérieure d'habitacle actuelle mesurée pour réguler les organes de réglage (4 à 7)
et dans le cas d'un redémarrage du véhicule à l'intérieur du laps de temps fixé (stationnement de courte durée) et, en présence d'une valeur mesurée de température intérieure d'habitacle actuelle supérieure à la température intérieure d'habitacle mesurée juste avant la coupure du moteur du véhicule,
- on utilise la température intérieure d'habitacle mémorisée en dernier, avant la coupure du moteur du véhicule, pour la régulation des organes de réglage (4 à 7), si l'ensoleillement pendant la période d'arrêt était inférieur à une valeur minimale,
- on utilise la température intérieure d'habitacle actuelle mesurée pour la régulation des organes de réglage (4 à 7), si l'ensoleillement pendant la période d'arrêt était supérieur à une valeur maximale et
- on utilise une valeur de température intérieure d'habitacle calculée par corrélation entre la température actuelle mesurée et la température intérieure d'habitacle mémorisée en dernier avant la coupure du moteur du véhicule pour la régulation des organes de réglage (4 à 7), si l'ensoleillement pendant l'arrêt était compris entre la valeur minimale et la valeur maximale.

7. Dispositif de climatisation pour la mise en ouvre du procédé selon les revendications 1 à 6, comprenant:
- un système de régulation (8),
- au moins un capteur de température intérieure d'habitacle (11) , le cas échéant un capteur de température extérieure (10), au moins un transmetteur de température de consigne (9) et au moins un senseur de soleil (12),
- des organes de réglage (4 à 7) commandés par le dispositif de régulation (8) qui agissent sur la quantité de chaleur, la quantité d'air et la répartition de l'air introduit dans l'habitacle et
- un circuit de veille qui fonctionne en continu ou de manière périodique pendant l'arrêt du véhicule et inscrit dans une mémoire électronique (20) les valeurs de mesure délivrées par le senseur de soleil (12).
